# EUROPÄISCHE PATENTSCHRIFT

(11) **EP 1 419 199 B1**
(45) Veröffentlichungstag und Bekanntmachung des Hinweises auf die Patenterteilung: **09.11.2005**
(21) Anmeldenummer: 02794736.5
(22) Anmeldetag: 27.07.2002
(51) Int. Cl.: C09B 63/00

(54) **VERLACKTE MONOAZOPIGMENTE AUF BASIS VON 1-NAPHTHOLSULFONSÄUREN**
LAKED 1-NAPHTHOLSULPHONIC ACID-BASED MONOAZO PIGMENTS
PIGMENTS MONOAZO LAQUES A BASE D'ACIDES 1-NAPHTOLSULFONIQUES

(30) Priorität: 14.08.2001 DE 10139826
(43) Veröffentlichungstag der Anmeldung: 19.05.2004
(73) Patentinhaber: Clariant GmbH, 65929 Frankfurt am Main (DE)
(72) Erfinder: METZ, Hans, Joachim, 64285 Darmstadt (DE); NABAR, Uday, T., Vile Parle (East), Mumbai 400 057 (IN); MORGENROTH, Frank, 63477 Maintal (DE); PATIL, Chandrashekhar, D., Thane 400 602, Maharashtra (IN); DEVAL, Sunil, D., Chunabhatti (East), Mumbai 400 022 (IN)
(74) Vertreter: Hütter, Klaus
(86) Internationale Anmeldenummer: PCT/EP2002/008392
(87) Internationale Veröffentlichungsnummer: WO 2003/016408

(56) Entgegenhaltungen:
- DE-C- 145 908
- DE-C- 724 186
- FR-A- 339 606
- FR-A- 344 395
- GB-A- 319 370
- GB-A- 1 313 147
- US-A- 2 856 397
- US-A- 5 677 435

## Beschreibung

Die vorliegende Erfindung betrifft neue Azopigmente auf der Basis von Naphtholsulfonsäuren und ein Verfahren zu ihrer Herstellung.

Verlackte Monoazopigmente aus der Reihe der Naphtholsulfonsäuren sind prinzipiell bekannt, z.B. als Pigment Yellow 104, P. Orange 19, P. Red 60, 66 und 67. Sie werden zur Einfärbung von Druckfarben, Tinten und von Kunststoffen vorgeschlagen. Es ist aber auch bekannt, dass diese Pigmente schlechte Echtheitseigenschaften besitzen, namentlich schlechte Lichtechtheiten und außerdem unzureichende Farbstärken.

Farbmittel des genannten Typs mit verbesserten Echtheitseigenschaften wurden beispielsweise in WO 98/13425 oder GB 1313147 beschrieben. Die dort beschriebenen Pigmente besitzen jedoch nicht gleichzeitig hohe Lichtechtheiten und hohe Farbstärken.

Ziel der vorliegenden Erfindung war es daher, verlackte gelbe, orange, braune und rote Azopigmente zu finden, die gleichzeitig hohe Lichtechtheiten und hohe Farbstärken besitzen.

Überraschenderweise wurde gefunden, dass verlackte Monoazopigmente mit dem erfindungsgemäßen Substitutionsmuster die gewünschten Eigenschaften besitzen.

Gegenstand der vorliegenden Erfindung sind Verbindungen der Formel (1) 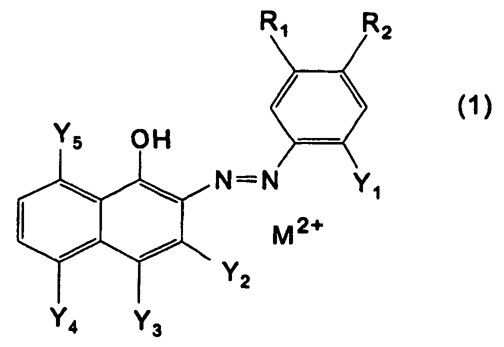 worin
- R₁: die Bedeutung H, Cl oder CH₃ hat,
- R₂: die Bedeutung H oder Cl hat,
- M²⁺: die Bedeutung Mg²⁺, Mn²⁺ oder Sr²⁺ hat,
- Y₁ =: die Bedeutung COO⁻ oder SO₃⁻ hat, und
- Y₂ =: SO₃⁻, Y₃ = Y₄ = Y₅ = H; oder Y₃ = SO₃⁻, Y₂ = Y₄ = Y₅ = H; oder
- Y₄ =: SO₃⁻, Y₂ = Y₃ = Y₅ = H; oder Y₅ = SO₃⁻, Y₂ = Y₃ = Y₄ = H bedeuten.

Bevorzugte Verbindungen im Sinne der vorliegenden Erfindung sind:
Verbindung (1a) mit R₁ = Cl, R₂ = H, M²⁺ = Sr²⁺, Y₁ = COO⁻,
Y₂ = Y₃ = Y₅ = H, Y₄ = SO₃⁻;
Verbindung (1b) mit R₁ = Cl, R₂ = H, M²⁺ = Mn²⁺, Y₁ = COO⁻,
Y₂=Y₃=Y₄=H, Y₅=SO₃⁻;
Verbindung (1c) mit R₁ = H, R₂ = H, M²⁺ = Sr²⁺, Y₁ = COO⁻,
Y₃ = Y₄ = Y₅ = H, Y₂ = SO₃⁻;
Verbindung (1d) mit R₁ = CH₃, R₂ = Cl, M²⁺ = Mg²⁺, Y₁ = SO₃⁻,
Y₂=Y₄=Y₅=H, Y₃=SO₃⁻.

Die erfindungsgemäßen Pigmente können durch Diazotierung eines Amins der Formel (2), 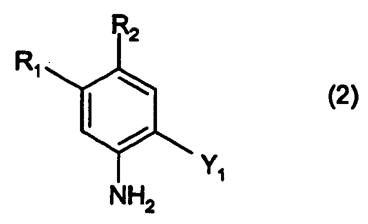 anschließende Kupplung mit einer Naphtholsulfonsäure der Formel (3) 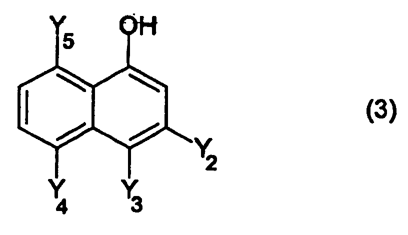 und Verlackung mit einem Magnesium-, Mangan- oder Strontiumsalz hergestellt werden.

Als Amine kommen vorzugsweise Anthranilsäure, 4-Chloranthranilsäure, 4-Methylanthranilsäure, 2-Amino-5-chlor-4-methylbenzolsulfonsäure und 2-Amino-4-methylbenzolsulfonsäure in Betracht.

Für die Diazotierungsreaktion eignen sich Alkalimetallnitrite oder die Alkylnitrite kurzkettiger Alkane, zusammen mit starken Mineralsäuren. Besonders geeignet sind Natriumnitrit und Salzsäure. Die Reaktion kann in einem Temperaturbereich von -5°C bis + 30°C durchgeführt werden, vorzugsweise zwischen 0°C und 10°C. Obwohl nicht erforderlich, können bei der Diazotierung nichtionogene, anionische oder kationische oberflächenaktive Substanzen zugegen sein. Gegebenenfalls können auch weitere Hilfsmittel, wie natürliche oder synthetische Harze oder Harzderivate, verwendet werden.

Die Naphtholsulfonsäuren der Formel (3) können als freie Säuren oder als Salze, wie z.B. Alkali- oder Ammoniumsalze, eingesetzt werden. Die Kupplung ist nach der direkten oder inversen Methode möglich, erfolgt vorzugsweise jedoch direkt, d.h. das Diazoniumsalz wird zur vorgelegten Kuppelkomponente gegeben. Die Kuppelreaktion kann in einem Temperaturbereich zwischen -5°C und 80°C durchgeführt werden, vorzugsweise zwischen 5°C und 25°C, und bei einem pH-Wert zwischen pH 4 und pH 14, insbesondere zwischen pH 9 und pH 12. Wie die Diazotierungsreaktion kann auch die Kupplung in Gegenwart oberflächenaktiver Substanzen, Harze sowie Harzderivate oder üblicher Additive durchgeführt werden. Im allgemeinen wird die Kuppelkomponente, bezogen auf die Diazoniumverbindung, in einem leichten Überschuss eingesetzt, vorzugsweise wird 1 Äquivalent Diazokomponente mit 1,02 bis 1,10 Äquivalenten der Kuppelkomponente umgesetzt. Es ist bekannt, dass bei der Kupplung der Kuppelkomponenten 1-Naphthol-3-sulfonsäure, 1-Naphthol-5-sulfonsäure bzw. 1-Naphthol-8-sulfonsäure neben dem ortho-Kupplungsprodukt als Hauptkomponente in geringem Maße als Nebenkomponente auch das para-Kupplungsprodukt gebildet werden kann. Der Anteil der Nebenkomponenten kann 0 bis 20 % betragen.

Der Zusatz von alkalilöslichen harzartigen Hilfsmitteln oder Mischungen davon während oder nach der Kupplung, sowie vor oder während der Verlackung verbessert die Dispergierbarkeit der Pigmente. Zweckmäßigerweise werden die harzartigen Hilfsmitteln oder Mischungen davon in Form ihrer wässrig-alkalischen Lösungen eingesetzt. Als harzartige Hilfsmittel eignen sich natürliche und synthetische Harze. Als vorteilhaft sind Kolophonium, disproportioniertes bzw. hydriertes Kolophonium, sowie Kolophoniumderivate zu nennen. Bevorzugt sind natürliche Harzsäuren, wie Abietinsäure, Dihydroabietinsäure, Tetrahydroabietinsäure, Laevopimarsäure, Dextropimarsäure und Isodextropimarsäure, wie sie in handelsüblichen Kolophoniumarten vorliegen. Besonders bevorzugt ist das kommerziell erhältliche, Harz Rosin N, das die Harzsäuren Abietinsäure, Dehydroabetinsäure, Neoabietinsäure, Palustrinsäure, Isopimarsäure, Pimarsäure und Sandaracopimarsäure enthält, oder ein dem Rosin N äquivalentes Handelsprodukt. Neben den aufgezählten Harzen und deren Derivaten, können auch Alkydharze oder synthetische Kohlenwasserstoffharze mit hoher Säurezahl eingesetzt werden. Die genannten Harze werden vorzugsweise im Anschluss an die Kupplungsreaktion der Reaktionsmischung zugefügt.

Die Verlackung der hergestellten Kupplungsprodukte erfolgt durch Zugabe von Magnesium-, Mangan- oder Strontiumsalzen oder deren wässrigen Lösungen. Vorzugsweise verwendet man eine wässrige Lösung eines der genannten Metallsalze. Geeignete Metallsalze sind z.B. Magnesiumchlorid oder -nitrat sowie Strontiumchlorid oder-nitrat und Mangan(II)sulfat oder -chlorid, besonders geeignet sind wässrige Metallsalzlösungen von Magnesiumchlorid, Strontiumchlorid bzw. Mangan(II)sulfat. Die Verlackung erfolgt zweckmäßigerweise bei einer Temperatur zwischen 25 und 80°C, bevorzugt zwischen 50 und 60°C.

Nach der Verlackung werden die erfindungsgemäßen Verbindungen bevorzugt einer Wärmebehandlung in wässrigem, wässrig-organischem oder organischem Medium bei Temperaturen zwischen 80 und 200°C, ggf. unter Druck, und zweckmäßigerweise für 1 bis 6 Stunden unterworfen, insbesondere in Gegenwart der vorstehend genannten harzartigen Hilfsmittel. Anschließend können die erhaltenen Pigmentsuspensionen auf die übliche Weise filtriert, der Presskuchen mit Wasser salzfrei gewaschen, getrocknet und gemahlen werden.

Die Verbindungen der Formel (1) lassen sich zum Pigmentieren von hochmolekularen organischen Materialien natürlicher oder synthetischer Herkunft einsetzen, beispielsweise von Kunststoffen, Harzen, Lacken, Anstrichfarben oder elektrophotographischen Tonern und Entwicklern, sowie von Tinten und Druckfarben.

Hochmolekulare organische Materialien, die mit den erfindungsgemäßen Verbindungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorllegen. Je nach Verwendungszweck erweist es sich als vorteilhaft, die erfindungsgemäßen Verbindungen als Blend oder in Form von Präparationen oder Dispersionen zu benutzen. Bezogen auf das zu pigmentierende, hochmolekulare organische Material setzt man die erfindungsgemäßen Verbindungen in einer Menge von 0,05 bis 30 Gew.-%, vorzugsweise 0,1 bis 15 Gew.-% ein.

Die erfindungsgemäßen Verbindungen sind auch geeignet als Farbmittel in elektrophotographischen Tonern und Entwicklern, wie beispielsweise Ein- oder Zweikomponentenpulvertonem (auch Ein- oder Zweikomponenten-Entwickler genannt), Magnettoner, Flüssigtoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäßen Verbindungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandlamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Verbindungen als Farbmittel in Ink-Jet Tinten auf wässriger und nichtwässriger Basis sowie in solchen Tinten, die nach dem Hot-melt-Verfahren arbeiten, geeignet

Weiterhin sind die erfindungsgemäßen Verbindungen auch als Farbmittel für Farbfilter sowohl für die additive wie subtraktive Farberzeugung geeignet.

Zur Beurteilung der Eigenschaften der nach der Erfindung hergestellten Pigmente auf dem Lacksektor wurde aus der Vielzahl der bekannten Lacke ein aromatenhaltiger Alkydmelaminharzlack (AM-Lack) auf Basis eines mittelöligen, nicht trocknenden Alkydharzes ausgewählt.

Die erfindungsgemäßen Pigmente zeichnen sich durch hervorragende Echtheitseigenschaften aus, insbesondere besitzen sie gleichzeitig hohe Lichtechtheiten und Farbstärken. Sie enthalten keine für die Umwelt bedenklichen Schwermetalle. Die aufgezählten Eigenschaften qualifizieren die erfindungsgemäßen Pigmente insbesondere zum Einsatz als Farbmittel im Druckbereich (insbesondere Druckfarben, Herstellung von Ink-Jet Tinten) sowie zur Verwendung in Lacken und in Kunststoffen, Farbfiltern, Tonern und zur Einfärbung von Saatgut.

Mit dem Begriff "Teile" sind in den folgenden Beispielen und Vergleichsbeispielen Gewichtsteile gemeint.

### Beispiel 1

### a) Zubereitung von Rosin N Lösung

Zu 4000 Teilen Wasser gibt man 88 Teile einer wässrigen Natriumhydroxidlösung (40 % w/w) und erhitzt auf 90°C. Innerhalb ca. 1 Stunde werden portionsweise 800 Teile festes Rosin N (Fa. Dujadwala and Company, Mumbai, Indien) zugegeben. Danach erhitzt man ca. 30 Minuten zum Sieden, bis man eine Lösung erhalten hat und füllt mit Wasser auf eine Gesamtmenge von 8000 Teilen Rosin N Lösung auf.

### b) Diazotierung

51,5 Teile 4-Chloranthranilsäure werden in 350 Teilen Wasser angerührt und nach Zugabe von 48,4 Teilen wässriger Natriumhydroxidlösung (40 % w/w) solange gerührt, bis sich das Amin vollständig gelöst hat. Die erhaltene Lösung kühlt man auf 10°C und versetzt mit 51,8 Teilen wässriger Natriumnitritlösung (40 % w/w). In einem zweiten Gefäß werden 300 Teile Wasser und 108,8 Teile Salzsäure (30 w/w) vorgelegt und durch Zugabe von Eis auf 5°C gekühlt. Bei einer Temperatur zwischen 0 und 5°C tropft man innerhalb von 10 bis 15 Minuten unter Rühren zu der Säure/Eisvorlage die alkalische Lösung der 4-Chloranthranilsäure. Nach der Zugabe der Natriumnitritlösung rührt man bei einer Temperatur zwischen 5 und 10°C 1 Stunde nach. Im Anschluss wird der Nitritüberschuss durch Zugabe von Amidosulfonsäure beseitigt.

### c) Kupplung

Man legt eine Mischung aus 200 Teilen Wasser und 500 Teilen Eis vor. Zu dieser Vorlage werden unter Rühren 70,6 Teile 1-Hydroxy-naphthalin-5-sulfonsäure (L-Säure) gegeben und anschließend durch Zugabe von wässriger Natriumhydroxidlösung (40 % w/w) ein pH-Wert von 12 bis 13 eingestellt. Zu der erhaltenen Lösung tropft man innerhalb von 15 bis 20 Minuten das Diazoniumsalz der 4-Chloranthranilsäure aus b) bei einer Temperatur zwischen 5 und 10°C zu und rührt 1 Stunde nach. Während der Nachrührzeit lässt man die Temperatur der Reaktionsmischung von ca. 10°C auf ca. 20°C ansteigen. Wenn keine Diazoniumverbindung und nur noch Spuren der Kuppelkomponente nachweisbar sind, versetzt man unter Rühren mit 150 Teilen der gemäß a) hergestellten Rosin N Lösung und rührt weitere 10 bis 15 Minuten. Dann wird der pH-Wert durch Zugabe von Salzsäure (10 % w/w) auf pH.5 bis 6 eingestellt.

### d) Verlackung

Die Reaktionsmischung wird auf 55°C erhitzt. Bei dieser Temperatur tropft man innerhalb von ca. 10 Minuten eine Lösung von 95,1 Teilen Strontiumchlorid in 300 Teilen Wasser zu und rührt, bis die Verlackung vollständig ist (ca. eine halbe Stunde).

### e) Nachbehandlung des Rohpigments

Die erhaltene Suspension des Rohpigmentes wird durch Zugabe von Salzsäure (30 % w/w) auf pH 4,0 eingestellt, dann wird innerhalb einer Stunde auf 95°C erhitzt und eine weitere Stunde bei dieser Temperatur gerührt. Nach dieser Zeit lässt man auf ca. 30°C abkühlen und filtert das Pigment ab, wobei der Filterkuchen mit Wasser salzfrei gewaschen wird. Der Filterkuchen wird getrocknet und gemahlen. Man erhält 172 Teile eines roten Pigments: Verbindung (1a).

Das Pigment liefert im AM-Lack eine überlackierechte, farbstarke Lackierung, die eine hohe Lichtechtheit aufweist. Die Überlackierechtheit beträgt 5 gegen den 5-stufigen Graumaßstab "Anbluten" nach DIN 54002.

### Beispiel 2

Man geht, abgesehen von den folgenden Punkten, wie in Beispiel 1 vor:
Als Kuppelkomponente verwendet man 70,6 Teile 1-Hydroxy-naphthalin-8-sulfonsäure.
Zur Verlackung setzt man eine Lösung von 90,6 Teilen Mangan(II)sulfat in 300 Teilen Wasser ein.

Das erhaltene Pigment wird in einer Mischung aus 1800 Teilen iso-Butanol und 800 Teilen Wasser angeschlämmt. Die erhaltene Suspension erhitzt man innerhalb einer Stunde auf 89°C und hält diese Temperatur zwei weitere Stunden. Nach dieser Zeit lässt man auf ca. 30°C abkühlen und filtert das Pigment ab. Der Filterkuchen wird getrocknet und gemahlen. Man erhält 115 Teile eines braunen Pigments: Verbindung (1 b).

### Beispiel 3

Man geht, abgesehen von den folgenden Punkten, wie in Beispiel 1 vor:
Diazotierung: 41,1 Teile Anthranilsäure werden in 360 Teilen Wasser vorgelegt und unter Rühren mit 121,0 Teilen Salzsäure (30 % w/w) versetzt. Dann kühlt man durch Zugabe von Eis auf 2 bis 5°C und tropft innerhalb von 10 bis 15 Minuten 62,2 Teile einer wässrigen Natriumnitritlösung (40 % w/w) zu. Anschließend rührt man bei 5°C eine Stunde lang. Im Anschluss wird der Nitritüberschuss durch Zugabe von Amidosulfonsäure beseitigt.
Als Kuppelkomponente verwendet man 77,5 Teile des Natriumsatzes der 1-Hydroxy-naphthalin-3-sulfonsäure (Natriumsalz der Armstrong Wynne-Säure). Das erhaltene Pigment wird in 1250 Teilen N-Methylpyrrolidon angeschlämmt. Die erhaltene Suspension erhitzt man innerhalb einer Stunde auf 155°C und hält diese Temperatur eine weitere Stunde. Nach dieser Zeit lässt man auf ca. 30°C abkühlen und filtert das Pigment ab. Der Filterkuchen wird bei 80°C über Nacht unter vermindertem Druck getrocknet und gemahlen. Man erhält 136 Teile eines orangen Pigments: Verbindung (1c).

### Beispiel 4

Man geht, abgesehen von den folgenden Punkten, wie in Beispiel 1 vor:
Als Diazokomponente verwendet man 66,4 Teile 2-Amino-5-chlor-4-methylbenzolsulfonsäure (CLT-Säure).
Als Kuppelkomponente verwendet man 70,6 Teile 1-Hydroxy-naphthalin-4-sulfonsäure (Nevile Winther-Säure).
Zur Verlackung setzt man eine Lösung von 57,1 Teilen Magnesiumchlorid in 300 Teilen Wasser ein.
Man erhält 144 Teile eines orangen Pigments: Verbindung (1d).

### Vergleichsbeispiele 1 bis 3

### Vergleichsbeispiel 1

Wie in der WO 98/13425 (Beispiel 2) beschrieben, wird 2-Amino-5-chloro-4-methylbenzolsulfonsäure (CLT-Säure) auf das Kaliumsalz der 2-Hydroxynaphthalin-6-sulfonsäure (Kaliumsalz der Schäffer-Säure) gekuppelt und mit Strontium verlackt.

### Vergleichsbeispiel 2

Wie in der WO 98/13425 (Beispiel 4) beschrieben, wird 2-Amino-5-chloro-4-ethylbenzolsulfonsäure (Homo-CLT-Säure) auf das Kaliumsalz der 2-Hydroxynaphthalin-6-sulfonsäure (Kaliumsalz der Schäffer-Säure) gekuppelt und mit Strontium verlackt.

### Vergleichsbeispiel 3

Die in GB 1 313 147 in Beispiel 2 beschrieben Pigmente werden wie folgt hergestellt:
a) Diazotierung von 2-Amino-5-methylbenzolsulfonsäure, anschließende Kupplung auf 1-Naphthol-4-sulfonsäure und Verlackung des erhaltenen Kupplungsprodukts mit Calcium.
b) Diazotierung von 2-Amino-5-methylbenzolsulfonsäure, anschließende Kupplung auf 2-Hydroxy-naphthalin-3-carbonsäure und Verlackung des erhaltenen Kupplungsprodukts mit Calcium hergestellt.

Die Farbstärke und Lichtechtheit der in den vorstehenden Beispielen und Vergleichsbeispielen hergestellten Pigmente werden in Tabelle 1 und 2 angegeben.

**Tabelle 1**

| (Beispiele 1 bis 4): | | | | | | | |
|---|---|---|---|---|---|---|---|
| Bsp. | Amin: | Kupplungskomponente: | Farbe: | M | FST | LiE/VT | LiE/AH |
| 1 | 4-Chloranthranilsäure | 1-Naphthol-5-sulfonsäure | rot | Sr²⁺ | 1:2,41 | 8 | 6 |
| 2 | 4-Chloranthranilsäure | 1-Naphthol-8-sulfonsäure | braun | Mn² | 1:3,55 | 7-8 | 6 |
| 3 | Anthranilsäure | 1-Naphthol-3-sulfonsäure | orange | Sr²⁺ | 1:2,52 | 8 | 6-7 |
| 4 | CLT-Säure | 1-Naphthol-4-sulfonsäure | orange | Mg²⁺ | 1:2,17 | 8 | 5 |

**Tabelle 2**

| (Vergleichsbeispiele 1 bis 3): | | | | | | | |
|---|---|---|---|---|---|---|---|
| Bsp. | Amin: | Kupplungskomponente: | Farbe: | M | FST | LiE/VT | LiE/AH |
| 1 | CLT-Säure | 2-Naphthol-6-sulfonsäure | orange | Sr²⁺ | 1:1,92 | 6 | 4 |
| 2 | Homo-CLT-Säure | 2-Naphthol-6-sulfonsäure | rot | Sr²⁺ | 1:1,96 | 6-7 | 3-4 |
| 3a | 2-Amino-5-methylbenzolsulfonsäure | 1-Naphthol-4-sulfonsäure | rot | Ca²⁺ | 1:2.68 | 6 | 3-4 |
| 3b | 2-Amino-5-methylbenzolsulfonsäure | 2-Naphthol-3-carbonsäure | rot | Ca²⁺ | 1:0.89 | 6 | 2-3 |
| M = Metallkation | | | | | | | |
| FST = Farbstärke | | | | | | | |
| LiE/VT = Lichtechtheit Vollton | | | | | | | |
| LiE/AH = Lichtechtheit Aufhellung | | | | | | | |

Die Farbstärke (FST) gibt an, wie viele Teile TiO₂ notwendig sind, um 1 Teil Buntpigment auf 1/3 Standard-Farbtiefe (DIN 53235) zu bringen: 1:x TiO₂.

Die Lichtechtheit wurde gegen die 8-stufige Blauskala in Anlehnung an DIN 54003 im Vollton und in der Aufhellung bestimmt. "8 entspricht der höchsten, "1" der niedrigsten Lichtechtheit.

## Patentansprüche

1. Verbindung der allgemeinen Formel (1) 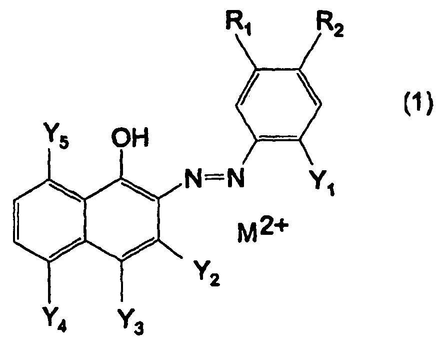 worin
R₁ die Bedeutung H, Cl oder CH₃ hat,
R₂ die Bedeutung H oder Cl hat,
M²⁺ die Bedeutung Mg²⁺, Mn²⁺ oder Sr²⁺ hat,
Y₁ = die Bedeutung COO⁻ oder SO₃⁻ hat, und
Y₂ = SO₃⁻, Y₃ = Y₄ = Y₅ = H; oder Y₃ = SO₃⁻, Y₂ = Y₄ = Y₅ = H; oder
Y₄ = SO₃⁻, Y₂ = Y₃ = Y₅ = H; oder Y₅ = SO₃⁻, Y₂ = Y₃ = Y₄ = H bedeuten.

2. Verbindung nach Anspruch 1, **dadurch gekennzeichnet, dass**
R₁ = Cl, R₂ = H, M²⁺ = Sr²⁺, Y₁ = COO⁻ und Y₂ = Y₃ = Y₅ = H, Y₄ = SO₃⁻ bedeuten.

3. Verbindung nach Anspruch 1, **dadurch gekennzeichnet, dass**
R₁ = Cl, R₂ = H, M²⁺ = Mn²⁺, Y₁ = COO⁻ und Y₂ = Y₃ = Y₄ = H, Y₅ = SO₃⁻ bedeuten.

4. Verbindung nach Anspruch 1, **dadurch gekennzeichnet, dass**
R₁ = H, R₂ = H, M²⁺ = Sr²⁺, Y₁ = COO⁻ und Y₃ = Y₄ = Y₅ = H, Y₂ = SO₃⁻ bedeuten.

5. Verbindung nach Anspruch 1, **dadurch gekennzeichnet, dass**
R₁ = CH₃, R₂ = Cl, M²⁺ = Mg²⁺, Y₁ = SO₃⁻ und Y₂ = Y₄ = Y₅ = H, Y₃ = SO₃⁻ bedeuten.

6. Verfahren zur Herstellung einer Verbindung gemäß mindestens einem der Ansprüche 1 bis 5, **dadurch gekennzeichnet, dass** ein Amin der allgemeinen Formel (2) diazotiert wird, das entstandene Diazoniumsalz mit einer Naphtholsulfonsäure der allgemeinen Formel (3) gekuppelt wird und die entstandene Monoazoverbindung mit einem Magnesium-, Strontium- oder Mangansalz verlackt wird.

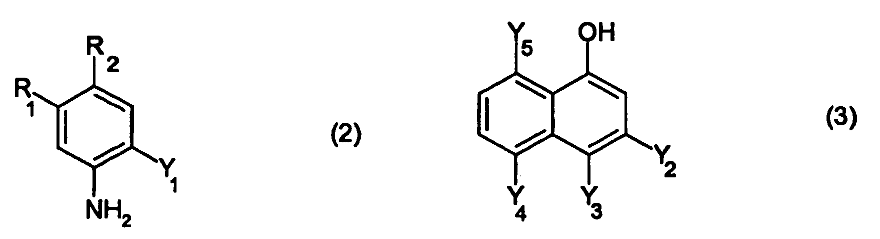

7. Verwendung einer Verbindung gemäß mindestens einem der Ansprüche 1 bis 5 zum Pigmentieren von hochmolekularen organischen Materialien, von Lacken, Anstrichstoffen, Druckfarben, elektrophotographischen Tonern und Entwicklern, Pulvern und Pulverlacken, Tinten und zur Einfärbung von Saatgut.

## Claims

1. A compound of the general formula (1) 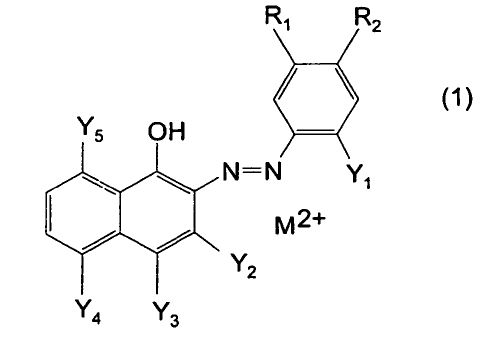 where
R₁ is H, Cl or CH₃,
R₂ is H or Cl,
M²⁺ is Mg²⁺, Mn²⁺ or Sr²⁺,
Y₁ = COO⁻ or SO₃⁻, and
Y₂ = SO₃⁻, Y₃ = Y₄ = Y₅= H; or Y₃ = SO₃⁻, Y₂ = Y₄ = Y₅= H; or
Y₄ = SO₃⁻, Y₂ = Y₃ = Y₅ = H; or Y₅ = SO₃⁻, Y₂ = Y₃ = Y₄= H.

2. A compound as claimed in claim 1, wherein
R₁ = Cl, R₂ = H, M²⁺ = Sr²⁺, Y₁ = COO⁻ and Y₂ = Y₃ = Y₅ = H, Y₄ = SO₃⁻.

3. A compound as claimed in claim 1, wherein
R₁ = Cl, R₂ = H, M²⁺ = Mn²⁺, Y₁ = COO⁻ and Y₂ = Y₃ = Y₄ = H, Y₅ = SO₃⁻.

4. A compound as claimed in claim 1, wherein
R₁ = H, R₂ = H, M²⁺ = Sr²⁺, Y₁ = COO⁻ and Y₃ = Y₄ = Y₅ = H, Y₂ = SO₃⁻.

5. A compound as claimed in claim 1, wherein
R₁ = CH₃, R₂ = Cl, M²⁺ = Mg²⁺, Y₁ = SO₃⁻ and Y₂ = Y₄ = Y₅ = H, Y₃ = SO₃⁻.

6. A process for preparing a compound as defined in at least one of claims 1 to 5, which comprises diazotizing an amine of the general formula (2), coupling the resultant diazonium salt with a naphtholsulfonic acid of the general formula (3) and laking the resultant monoazo compound with a magnesium, strontium or manganese salt.

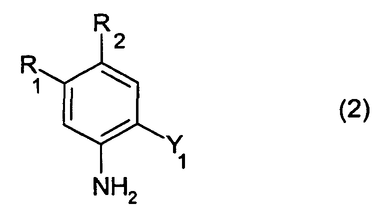

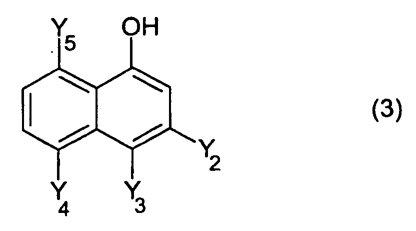

7. Use of a compound as defined in at least one of claims 1 to 5 for pigmentation of macromolecular organic materials, of varnishes, paints, printing inks, electrophotographic toners and developers, powders and powder coatings, inks other than printing inks and for coloration of seed.

## Revendications

1. Composé de formule générale (1) 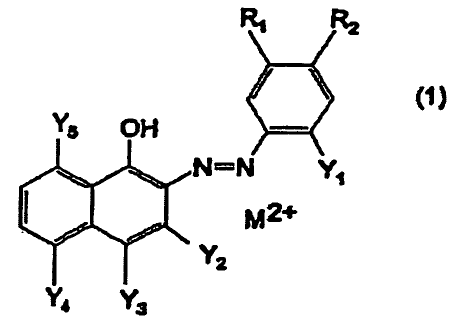 dans laquelle
R₁ représente H, Cl ou CH₃,
R₂ représente H ou Cl,
M²⁺ représente Mg²⁺, Mn²⁺ ou Sr²⁺,
Y₁ = représente COO⁻ ou SO₃⁻, et
Y₂ = SO₃⁻, Y₃ = Y₄ = Y₅ = H ; ou Y₃ = SO₃⁻, Y₂ = Y₄ = Y₅ = H ; ou
Y₄ = SO₃⁻, Y₂ = Y₃ = Y₅ = H ; ou Y₅ = SO₃⁻, Y₂ = Y₃ = Y₄ = H.

2. Composé selon la revendication 1, **caractérisé en ce que** R₁ = Cl, R₂ = H, M²⁺ = Sr²⁺, Y₁ = COO⁻ et Y₂ = Y₃ = Y₅ = H, Y₄ = SO₃⁻.

3. Composé selon la revendication 1, **caractérisé en ce que** R₁ = Cl, R₂ = H, M²⁺ = Mn²⁺, Y₁ = COO⁻ et Y₂ = Y₃ = Y₄ = H, Y₅ = SO₃⁻.

4. Composé selon la revendication 1, **caractérisé en ce que** R₁ = H, R₂ = H, M²⁺ = Sr²⁺, Y₁ = COO⁻ et Y₃ = Y₄ = Y₅ = H, Y₂ = SO₃⁻.

5. Composé selon la revendication 1, **caractérisé en ce que** R₁ = CH₃, R₂ = Cl, M²⁺ = Mg²⁺, Y₁ = SO₃⁻ et Y₂ = Y₄ = Y₅ = H, Y₃ = SO₃⁻.

6. Procédé de préparation d'un composé selon au moins l'une des revendications 1 à 5, **caractérisé en ce que** l'on effectue la diazotation d'une amine de formule générale (2), on effectue la copulation du sel de diazonium produit avec un acide naphtolsulfonique de formule générale (3) et on laque le composé monoazoïque obtenu avec un sel de magnésium, strontium ou manganèse.

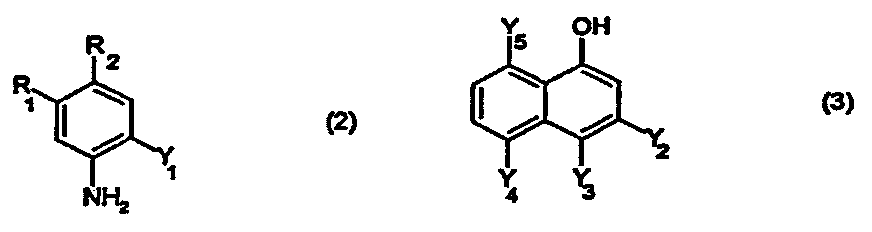

7. Utilisation d'un composé selon au moins l'une des revendications 1 à 5 pour la pigmentation de matériaux organiques de masse moléculaire élevée, de peintures, substances à peindre, colorants d'impression, toners électrophotographiques et révélateurs, poudres et peintures en poudre, encres et pour la teinture de semences.
